# FASCICULE DE BREVET EUROPEEN

(11) **EP 3 356 755 B1**
(45) Date de publication et mention de la délivrance du brevet: **11.08.2021**
(21) Numéro de dépôt: 16778763.9
(22) Date de dépôt: 03.10.2016
(51) Int. Cl.: F28D 20/00, F03G 7/04, F28D 20/02, F28F 21/06

(54) **SYSTÈME DE PRODUCTION ET DE STOCKAGE D'ÉNERGIE ÉLECTRIQUE AU MOYEN DE DOUBLET THERMIQUE**
SYSTEM ZUR ERZEUGUNG UND SPEICHERUNG VON ELEKTRISCHER ENERGIE MITTELS EINER THERMISCHER DUBLETTE
SYSTEM FOR PRODUCING AND STORING ELECTRICAL ENERGY BY MEANS OF A THERMAL DOUBLET

(30) Priorité: 02.10.2015 FR 1559374
(43) Date de publication de la demande: 08.08.2018
(73) Titulaire: BRGM, 45060 Orléans Cedex 2 (FR); Commissariat à l'Énergie Atomique et aux Énergies Alternatives, 75015 Paris (FR); Enertime, 92400 Courbevoie (FR)
(72) Inventeur: NGUYEN, Denis, 34000 Montpellier (FR); TAUVERON, Nicolas, 38100 Grenoble (FR); AYACHI, Fadhel, 38950 Saint-Martin-Le-Vinoux (FR); TARTIÈRE, Thomas, 49300 Cholet (FR)
(74) Mandataire: LLR
(86) Numéro de dépôt international: PCT/EP2016/073569
(87) Numéro de publication internationale: WO 2017/055626

(56) Documents cités:
- WO-A2-2013/102537
- DE-U1-202012 103 544
- FR-A1- 3 009 613
- T. Schmidt ET AL: "Solar district heating guidelines Storage Contents", , 1 août 2012 (2012-08-01), XP055112943, Extrait de l'Internet: URL:http://www.solar-district-heating.eu/P ortals/0/Factsheets/SDH-WP3_FS-7-2_Storage _version3.pdf [extrait le 2014-04-08]

## Description

La présente invention concerne le domaine du stockage et de la production d'électricité. En particulier, l'invention concerne un système et un procédé pour stocker de l'électricité sous forme thermique et pour produire de l'électricité à partir de ce stockage. Un système selon le préambule de la revendication 1 est connu de FR 3 009 613.

Pour trouver une alternative aux hydrocarbures en tant que source d'énergie, les systèmes thermiques représentent une source d'énergie attractive. La géothermie permet en effet de fournir de l'énergie électrique grâce à l'exploitation d'une différence de température se produisant naturellement. Cette différence de température est généralement comprise entre un point d'origine naturelle chaud bien en dessous de la surface de la terre, et de la température ambiante à l'emplacement du système de géothermie. Les systèmes thermiques conventionnels utilisent généralement une turbine à gaz pour entrainer un générateur électrique. Le générateur électrique, en réponse, fournit une énergie électrique.

On connaît également du document US2009217664 un autre système pour générer de l'énergie électrique en utilisant une différence de température se produisant naturellement : le système fournit de l'énergie électrique en exploitant un différentiel de température entre une source de chaleur thermique et une couche d'eau profonde et froide. L'élément thermoélectrique génère de l'énergie électrique sur la base de la différence de température entre ces deux surfaces.

L'inconvénient de ces systèmes est qu'ils nécessitent des sources naturelles. Or, il n'est pas toujours possible d'exploiter le gradient thermique du sous-sol et/ou la température des océans pour obtenir un rendement de production d'électricité suffisant.

De plus, le coût d'un forage thermique est relativement élevé du fait de la profondeur de forage pour obtenir une température suffisamment élevée.

On connaît également du document FR3009613, un système de production d'énergie électrique comprenant un géodoublet thermique dont les géostocks thermiques sont issus d'une technique de stockage thermique diffusif dans un massif rocheux.

Cependant un tel système, fondé sur un géostockage thermique diffusif dans un massif rocheux encaissant pour le stock chaud comme pour le stock froid, impose une température très négative pour le géostock froid pour que le stockage froid soit équivalent (en énergie stockée) au stockage chaud.

L'invention a pour but de remédier à ces inconvénients en fournissant au système un doublet thermique qui ne soit pas d'origine naturelle, et permettant d'améliorer le rendement thermodynamique du doublet thermique. Le système y parvient en comportant, pour le stock chaud, un stockage thermique diffusif dans un massif rocheux encaissant, et, pour le stock froid, un stockage en chaleur latente de fusion de la glace dans des bassins d'eau libre.

Ainsi, un premier objet de l'invention concerne un système de stockage d'énergie et de production d'énergie électrique, comprenant un doublet thermique comportant un premier stock thermique et un second stock thermique, des échangeurs thermiques implantés dans chacun desdits stocks thermiques, au moins un moyen permettant de faire circuler au moins un fluide caloporteur entre des échangeurs thermiques d'un stock thermique à un autre, un moyen de transformation de l'énergie électrique en énergie thermique, et un moyen de transformation de l'énergie thermique du fluide caloporteur en énergie électrique, mettant en œuvre un cycle thermodynamique utilisant une différence de température entre lesdits stocks thermiques. Selon l'invention, le premier stock thermique est issu d'une technique de stockage thermique diffusif dans un massif rocheux hors d'eau, et le second stock thermique est un stockage en chaleur latente en bassin d'eau congelée.

De ce fait, le système peut être implanté dans de nombreuses zones non accessibles aux techniques antérieures, et la température du doublet thermique étant contrôlée, le rendement est parfaitement maitrisé.

Selon un premier mode de réalisation, le fluide caloporteur est du CO₂ dans un état supercritique dans les échangeurs thermiques du stock thermique ayant la température la plus élevée, et du CO₂ dans un état diphasique liquide/gaz dans les échangeurs thermiques du stock thermique ayant la température la moins élevée.

Dans ce mode de réalisation, la température du CO₂ peut être sensiblement la température de fusion de la glace, et la pression du CO₂ peut être sensiblement de 20 bar, dans les échangeurs thermique du stock thermique ayant la température la moins élevée.

Dans ce mode de réalisation, la température du CO₂ peut être sensiblement comprise entre 0°C et 180°C, et de préférence entre 30°C et 140°C, et la pression du CO₂ peut être sensiblement comprise entre 80 bars et 160 bars, de préférence sensiblement égale à 140 bars, dans les échangeurs thermiques du stock thermique ayant la température la plus élevée.

Selon un second mode de réalisation, le moyen permettant de faire circuler au moins un fluide caloporteur, comporte :
- un échangeur de chaleur ;
- un premier moyen permettant de faire circuler un premier fluide caloporteur entre les échangeurs thermiques du stock thermique ayant la température la plus élevée et l'échangeur de chaleur ; et
- un second moyen permettant de faire circuler un second fluide caloporteur entre les échangeurs thermiques du stock thermique ayant la température la moins élevée et l'échangeur de chaleur, l'échangeur de chaleur permettant un échange de chaleur entre les premier et second fluides caloporteurs.

Dans ce second mode de réalisation, et de façon préférée, le premier fluide caloporteur peut être du CO₂, et le second fluide caloporteur peut être une solution aqueuse à base de mono-éthylène glycol.

L'échangeur de chaleur peut avantageusement être un échangeur à plaque.

Dans ce second mode de réalisation, les échangeurs thermiques du second stock thermique sont de préférence des tubes en polypropylène.

Enfin, le CO₂ peut avantageusement être en phase supercritique dans les échangeurs du premier stock thermique de plus forte température, et dans un état diphasique liquide/gaz en entrée de l'échangeur de chaleur.

Selon un mode de réalisation, au moins un échangeur thermique peut être une baudruche cylindrique en élastomère, et/ou au moins un échangeur thermique peut être un tube en polypropylène.

Le moyen de transformation utilise avantageusement un cycle thermodynamique basé sur un cycle de Rankine transcritique, le moyen de transformation de l'énergie thermique pouvant alors être une turbine de type ORC.

Le moyen de transformation de l'énergie électrique en énergie thermique utilise avantageusement un cycle thermodynamique de pompe à chaleur, le moyen de transformation de l'énergie électrique en énergie thermique pouvant alors comporter une pompe à chaleur.

L'invention concerne également un procédé de stockage d'énergie et de production d'énergie électrique, comprenant les étapes suivantes :
- on constitue un doublet thermique en réalisant un premier stock thermique dans un massif rocheux hors d'eau, au moyen d'une technique de stockage thermique diffusif dans ledit massif, et un second stock thermique de stockage en chaleur latente en bassin d'eau congelée.
- on fait circuler au moins un fluide caloporteur entre un premier stock thermique dudit doublet et un second stock thermique dudit doublet ; et
- lors d'une phase de production d'énergie électrique, on transforme l'énergie thermique d'au moins un fluide caloporteur en énergie électrique lors de son transport d'un stock thermique à un autre, en mettant en oeuvre un cycle thermodynamique utilisant une différence de température entre lesdits stocks thermiques ou lors d'une phase de stockage d'énergie thermique on transforme l'énergie électrique en énergie thermique en mettant en oeuvre un cycle thermodynamique de pompe à chaleur.

Selon un mode de réalisation, le fluide caloporteur est du CO₂, et l'on détermine la différence de température dudit doublet thermique de façon à assurer que le CO₂ soit en phase supercritique dans le stock thermique de plus forte température, et de façon à assurer que le CO₂ soit dans état diphasique liquide/gaz dans le stock thermique de plus faible température.

Selon un autre mode de réalisation, on utilise un système selon l'invention utilisant deux fluides caloporteurs, et on fait circuler un premier fluide caloporteur entre le premier stock thermique du doublet et l'échangeur de chaleur, et on fait circuler un deuxième fluide caloporteur entre le second stock thermique du doublet et l'échangeur de chaleur.

Enfin, de façon préférée, on transforme l'énergie thermique du fluide caloporteur en énergie électrique en utilisant un cycle thermodynamique basé sur un cycle de Rankine transcritique.

L'invention sera mieux comprise à la lecture des figures annexées, qui sont fournies à titre d'exemples et ne présentent aucun caractère limitatif, dans lesquelles :
- La figure 1 illustre un schéma d'un exemple de système de production d'électricité par doublet thermique selon l'invention.
- La figure 2 illustre un schéma d'un autre exemple de système de production d'électricité par doublet thermique selon l'invention.
- La figure 3 illustre plus en détail le premier stock thermique.
- La figure 4 illustre plus en détail le second stock thermique.
- La figure 5 représente un moyen de transformation de l'énergie thermique du fluide caloporteur.
- La figure 6 représente un organigramme du procédé selon l'invention.
- Les figures 7A et 7B représentent deux modes de fonctionnement du procédé selon l'invention.

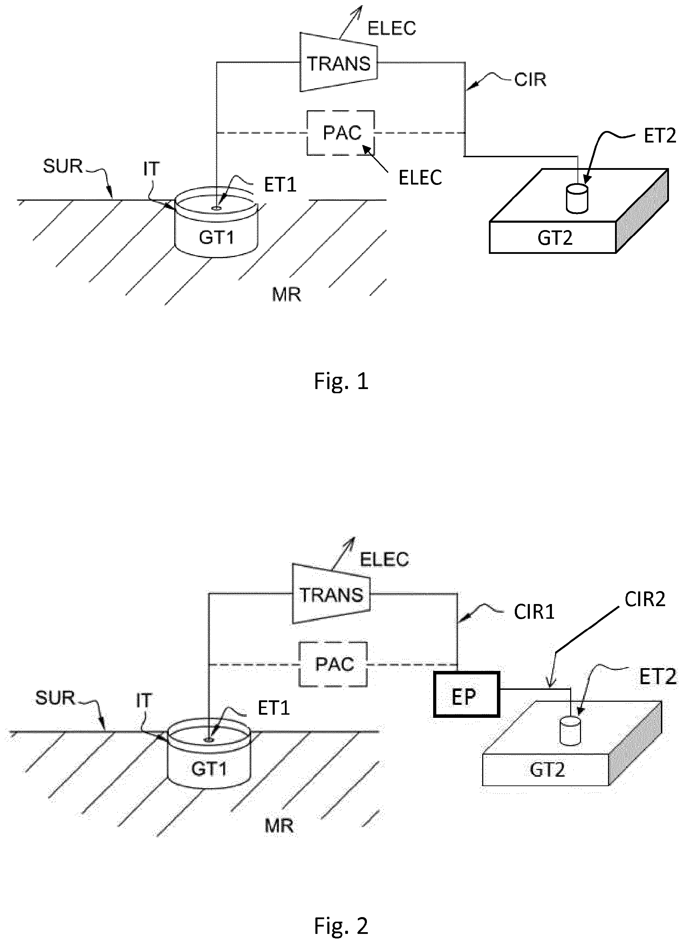

On se réfère maintenant à la figure 1 qui décrit schématiquement le système de stockage d'énergie et de production d'énergie électrique selon l'invention. Ce système comprend un doublet thermique comportant un premier stock thermique (GT1) et un second stock thermique (GT2). Des échangeurs thermiques (ET1, ET2) sont implantés dans chacun desdits stocks thermiques (GT1, GT2). Le système comporte également au moins un moyen (CIR) permettant de faire circuler au moins un fluide caloporteur entre des échangeurs thermiques d'un stock thermique à un autre et un moyen de transformation (TRANS) de l'énergie thermique du fluide caloporteur en énergie électrique. Selon l'invention, ce moyen de transformation met en œuvre un cycle thermodynamique utilisant une différence de température entre lesdits stocks thermiques (GT1, GT2). Afin de transformer l'énergie électrique en énergie thermique lors de la charge du système de stockage, le système comprend également au moins un moyen de transformation (PAC) de l'énergie électrique en énergie thermique.

Selon l'invention, le premier stock thermique (GT1) est issu d'une technique de stockage thermique diffusif dans un massif rocheux (MR) hors d'eau, alors que le second stock thermique (GT2) est un stockage en chaleur latente en bassin d'eau congelée.

Tout matériau possède la capacité de libérer ou de stocker de la chaleur via un transfert thermique. Ce transfert peut être :
- par chaleur sensible, c'est-à-dire par changement de la température du matériau, la chaleur est alors emmagasinée dans le matériau ;
- ou par chaleur latente, c'est-à-dire par changement de phase du matériau, généralement changement solide/liquide d'un matériau pour lequel la variation volumique est faible.

Le premier stock thermique (GT1) utilise un transfert thermique par chaleur sensible, alors que le second stock (GT2) utilise un transfert thermique par chaleur latente (glace / eau liquide).

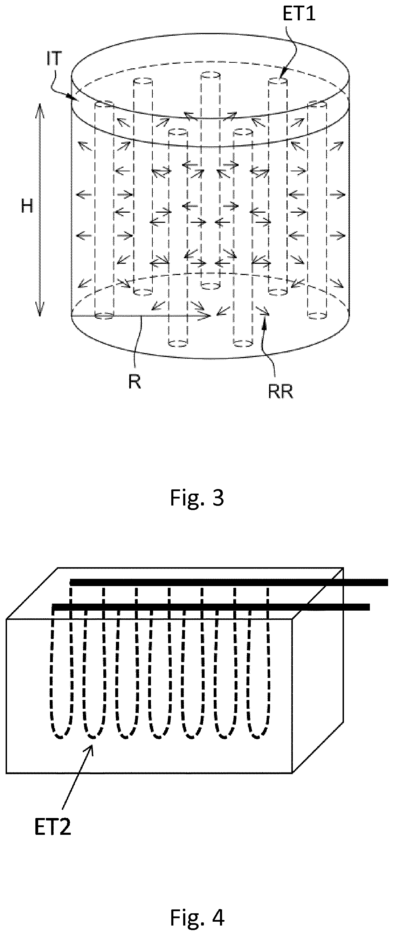

### Le premier stock thermique (GT1) - figure 3

Le premier stock thermique (GT1) constitue le stock chaud. Comme illustré sur la figure 3, il est une partie d'une masse rocheuse en place, appartenant au massif rocheux (MR) hors d'eau dans lequel on met en place une partie du doublet thermique. Il peut s'agir par exemple d'une masse de granité.

Dans le cadre de la présente invention, le terme « hors d'eau » fait référence au fait que la masse rocheuse constituant le premier stock thermique n'est pas au contact avec une nappe aquifère.

Il est obtenu à partir d'une technique de stockage thermique diffusif. Une telle technique est décrite par exemple dans le document suivant :
T. Schmidt, O. Miedaner, septembre 2011, « Solar district heating Fact sheet 7.2-1 », p. 1-12

La technique de stockage thermique diffusif utilise des échangeurs thermiques verticaux implantés dans un massif rocheux. Ils sont généralement implantés selon un maillage serré régulier et à relative faible profondeur (15m environ). Cette technique offre une forte capacité de stockage thermique. De plus, les sites de stockages sont facilement disponibles. Enfin, cette technique est robuste et son coût est faible par MWh thermique stocké.

De part ce procédé, le premier stock (GT1) constitue l'encaissant des échangeurs thermiques verticaux (ET1) mis en œuvre pour injecter ou soutirer la chaleur dans le massif rocheux. De ce fait, le stock a une forme sensiblement cylindrique due au rayonnement radial (RR sur la figure 3) de la chaleur à partir des échangeurs thermiques verticaux (l'ensemble de ces derniers ayant une forme également sensiblement cylindrique). Ainsi, un stock thermique est un volume cylindrique de masse rocheuse en place dans le massif rocheux. Ceci est illustré sur la figure 3.

De façon préférentielle, le rayon (R) du volume cylindrique est égal à la hauteur (H) de ce volume cylindrique (voir figure 3). Cette géométrie optimale minimise les pertes thermiques par diffusion, en minimisant la surface extérieure du stock.

Selon un mode de réalisation, le premier stock (GT1) est positionné en surface (SUR). Cette face peut être couverte par un moyen d'isolation thermique (IT), tel qu'une couche d'isolant thermique.

Selon un exemple de réalisation, la face inférieure peut être positionnée à une profondeur pouvant atteindre 35m, et préférentiellement à une profondeur inférieure ou égale à 15m. Le premier stock thermique (GT1) a une hauteur pouvant atteindre 30m, et de préférence sensiblement égale à 12 m (pour des raisons de précision du forage, pour assurer des échangeurs verticaux ajustés dans le trou de forage) et un diamètre pouvant atteindre 70m, et de préférence sensiblement égal à 30 m.

### Le second stock thermique (GT2) - figure 4

Le second stock thermique (GT2) constitue le stock froid. Comme illustré sur la figure 4, il s'agît d'un stockage en chaleur latente en bassin d'eau congelée. Il peut s'agir d'eau pure ou d'une eau salée ayant une plus faible température de fusion.

Le second stock thermique (GT2) est constitué d'au moins un bassin d'eau libre, c'est-à-dire soumise à la pression atmosphérique, sous forme de liquide et/ou de glace. L'eau n'est donc pas contenue dans un bassin pressurisé. La température moyenne d'un bassin est comprise entre -5°C et +5°C. La contenance typique d'un tel bassin est de 3000m³. La proportion de glace dans les bassins peut varier en volume de 0% à près de 100%. Symétriquement, la proportion de l'eau liquide dans les bassins peut varier de 100% à près de 0%.

Des échangeurs thermiques (ET2) sont disposés dans les bassins. Ils peuvent être par exemple disposés sensiblement verticalement ou sensiblement horizontalement.

Le procédé d'utilisation d'un tel stock froid comprend notamment les étapes suivantes :
- lorsqu'un stockage d'énergie est requis, on congèle l'eau des bassins en stockant ainsi l'énergie en chaleur latente de fusion de la glace ;
- lorsqu'un déstockage d'énergie est requis, on fait fondre la glace des bassins en récupérant ainsi la chaleur latente de fusion de la glace.

Le procédé d'obtention d'un tel stock froid est bien connue des spécialistes, et comprend notamment les étapes suivantes :
- en situation de charge thermique (congélation des bassins), le fluide caloporteur du moyen de circulation (CIR) récupère la chaleur de l'eau du bassin (GT2) pour la transformer en glace ;
- en situation de décharge thermique (fonte des bassins), le fluide caloporteur du moyen de circulation (CIR) échange sa chaleur avec la glace du bassin (GT2) pour la transformer en eau liquide.

Un tel stock thermique froid peut être obtenu par la concession développée par la société Enertherm® (France) par exemple.

Une telle concession permet la production de froid (eau glacée) au moyen :
- d'une unité de production directe ;
- d'une unité de stockage de glace.

La température du fluide caloporteur dans le second stock thermique (GT2) est sensiblement la température de fusion de la glace

### Les échangeurs thermiques du géostock thermique (ET1)

Dans le premier stock thermique (GT1), le transfert thermique diffusif avec le massif rocheux encaissant est réalisé par des échangeurs géothermiques implantés verticalement, avec une densité approximative de quatre échangeurs par m². Les échangeurs sont positionnés dans des forages, typiquement de 12m de profondeur et pouvant atteindre 30m, exécutés suivant les techniques classiques de forage vertical d'ouvrages superficiels.

Pour un stock thermique typique, on compte environ 2500 échangeurs géothermiques agencés en séries parallèles.

Selon un mode de réalisation, un échangeur géothermique est une baudruche cylindrique en élastomère de silicone de 20cm de diamètre et de hauteur sensiblement égale à la hauteur d'un stock thermique (typiquement 12m et pouvant atteindre 30m), dans laquelle circule le fluide caloporteur qui échange sa chaleur avec le massif encaissant par conduction thermique à travers la paroi de l'échangeur.

L'utilisation d'échangeur géothermique sous forme de baudruche cylindrique en élastomère de silicone permet d'améliorer le couplage thermique entre l'échangeur et le massif rocheux encaissant, sans requérir de matériau de couplage thermique entre l'échangeur géothermique et le massif rocheux. En effet, lors de la mise en pression par le fluide caloporteur, la paroi de la baudruche vient se plaquer au contact du massif rocheux.

Par ailleurs, la résistance à la compression élevée du massif rocheux encaissant permet de contenir la pression interne dans l'échangeur s'exerçant sur la partie de la baudruche en contact avec les parois verticale et inférieure du forage.

De façon avantageuse, l'échangeur géothermique (ET1) comporte également un harnais de contention en sangle aramide dans sa partie supérieure en contact avec la pression atmosphérique. L'échangeur géothermique (ET1) peut ainsi fonctionner dans les conditions opérationnelles de température et pression du fluide caloporteur pour le stock chaud.

### Les échangeurs thermiques du bassin d'eau libre (ET2)

Dans le second stock thermique (GT2), le transfert thermique diffusif avec l'eau du bassin est réalisé par des échangeurs thermiques (ET2) qui peuvent être implantés verticalement et/ou horizontalement.

Selon un mode de réalisation, un échangeur géothermique est un tube, métallique ou en polypropylène, dans lequel circule le fluide caloporteur qui échange sa chaleur avec l'eau liquide ou la glace contenue dans les bassins par conduction thermique à travers la paroi des échangeurs.

### Le moyen (CIR) permettant de faire circuler un fluide caloporteur

Ce moyen peut être une conduite de type connu des spécialistes, et formant un circuit.

Le fluide caloporteur peut être un fluide réfrigérant de type hydrofluorocarbures ou hydrofluoroléfine.

Le fluide caloporteur est préférentiellement du CO₂ dans un état liquide, gazeux ou supercritique.

La pression du CO₂ et la différence de température du doublet thermique sont choisies pour assurer que le CO₂ soit en phase supercritique dans le premier stock thermique de plus forte température (GT1), et de façon à assurer que le CO₂ soit dans un état diphasique liquide/gaz dans le stock thermique (GT2) de plus faible température.

La température du CO₂, dans le premier stock (GT1) est sensiblement comprise entre 0°C et 180°C, et de préférence entre 30°C et 140°C, et la pression du CO₂ dans les échangeurs (ET1) est sensiblement comprise entre 80 bars et 160 bars, de préférence elle est sensiblement égale à 140 bars.

La température du CO₂ est sensiblement la température de fusion de la glace, et la pression du CO₂ est sensiblement de 20 bars, dans les échangeurs thermique (ET2) du stock thermique (GT2) ayant la température la moins élevée.

Selon un mode de réalisation préféré de réalisation (figure 2), le système de stockage d'énergie et de production d'énergie électrique selon l'invention, utilise deux fluides caloporteurs différents.

De ce fait, chaque stock thermique (GT1, GT2) comporte son propre moyen (CIR1, CIR2) de circulation d'un fluide caloporteur. Chaque circuit (CIR1, CIR2) permet alors de faire circuler un fluide caloporteur entre les échangeurs thermiques d'un stock thermique et un échangeur de chaleur (EP), tel qu'un échangeur de chaleur à plaques par exemple. L'échangeur de chaleur (EP) permet un échange de chaleur entre les deux fluides caloporteurs. Le moyen (CIR) permettant de faire circuler au moins un fluide caloporteur est alors composé des deux circuits (CIR1 et CIR2) et de l'échangeur de chaleur (EP).

De cette façon, il est possible d'utiliser un fluide caloporteur parfaitement adapté au stock thermique auquel il est rattaché. En effet, l'utilisation de CO₂ comme fluide caloporteur dans le stock thermique chaud implique des conditions de pression et de température pas toujours adaptées à un stockage en chaleur latente en bassin d'eau congelée.

Selon un exemple de réalisation, le stock thermique chaud (GT1) comporte un moyen de circulation (CIR1) dans lequel circule du CO₂ comme premier fluide caloporteur, et le stock thermique froid (GT2) comporte un moyen de circulation (CIR2) dans lequel circule une solution aqueuse à base de mono-éthylène glycol (MEG) comme second fluide caloporteur.

Selon ce mode de réalisation, le procédé d'obtention du stock froid (GT2) comprend notamment les étapes suivantes (les températures indiquées correspondent à un exemple de réalisation) :
- en situation de charge thermique (congélation des bassins), le CO₂ (environ -7°C) à l'état liquide, avec éventuellement une faible quantité de vapeur, échange par évaporation dans l'échangeur de chaleur (EP) sa chaleur avec la solution à base de mono-éthylène glycol (environ 0°C), qui se refroidit (à environ -4°C), la solution échange alors sa chaleur avec l'eau du bassin (GT2) pour la transformer en glace, et le CO₂ sort de l'échangeur (environ -6°C) ;
- en situation de décharge thermique (fonte des bassins), le CO₂ à l'état gazeux (environ 7°C), avec éventuellement une grande quantité de vapeur, échange par condensation dans l'échangeur de chaleur (EP) sa chaleur avec la solution à base de mono-éthylène glycol (environ 0°C) qui se réchauffe (à environ +4°C), la solution échange alors sa chaleur avec la glace du bassin (GT2) pour la transformer en eau liquide, et le CO₂ sort de l'échangeur (environ +6°C).

Avantageusement, un échangeur géothermique (ET2) dans lequel circule le second fluide caloporteur (solution à base de mono-éthylène glycol) est un tube métallique ou de préférence un tube en polypropylène.

De préférence, la pression du CO₂ et la différence de température du doublet thermique sont choisies pour assurer que le CO₂ soit en phase supercritique dans le premier stock thermique de plus forte température (GT1), et de façon à assurer que le CO₂ soit dans un état diphasique liquide/gaz en entrée de l'échangeur de chaleur (EP).

### Le moyen de transformation (TRANS) de l'énergie thermique en énergie électrique

Le moyen de transformation (TRANS) est avantageusement basé sur un cycle thermodynamique de Rankine transcritique ou sur un cycle basé sur celui de Rankine transcritique.

Ainsi, selon un mode de réalisation, on utilise un cycle de Rankine transcritique (ORC) qui fonctionne avec un fluide organique à grande masse molaire plutôt que de l'eau. Le moyen de transformation (TRANS) de l'énergie thermique est alors une turbine dite « turbine de type ORC ».

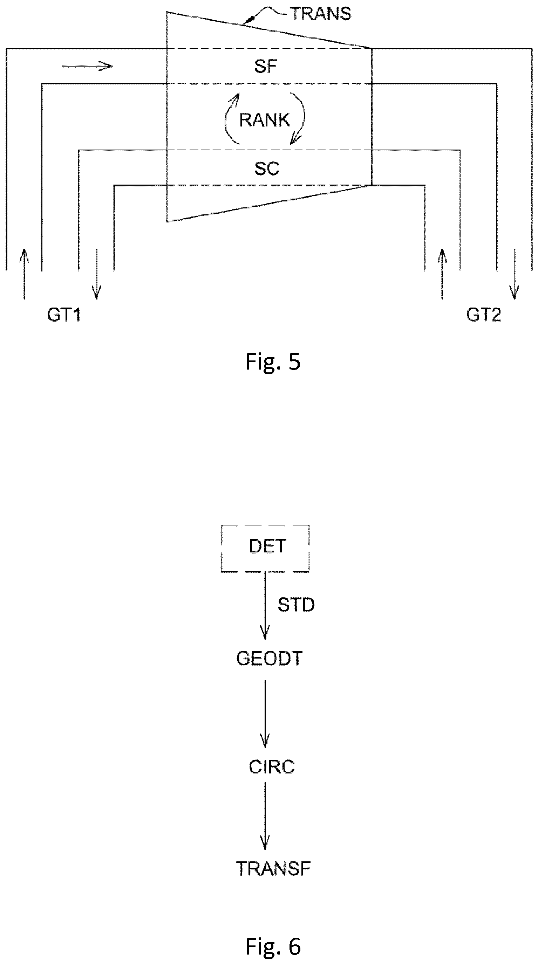

Un tel moyen est schématisé sur la figure 5 où les sources chaude (SC) et froide (SF) nécessaire au cycle de Rankine transcritique (RANK) sont représentées. On comprend ainsi que l'énergie thermique véhiculée du stock froid vers le moyen de transformation (TRANS) constitue la source froide du cycle thermodynamique de Rankine transcritique, alors que l'énergie thermique véhiculée du stock chaud vers le moyen de transformation (TRANS) en constitue la source chaude.

### Le moyen de transformation (PAC) de l'énergie électrique en énergie thermique

Le moyen de transformation (PAC) est avantageusement basé sur un cycle thermodynamique de pompe à chaleur.

Ainsi, selon un mode de réalisation, le moyen de transformation (PAC) de l'énergie électrique en énergie thermique comporte une pompe à chaleur (PAC) adaptée à régénérer la différence de température du doublet thermique, en situation de puissance électrique excédentaire.

Le moyen de transformation (PAC) de l'énergie électrique en énergie thermique peut également comporter un compresseur et une vanne d'expansion.

De façon avantageuse, le système peut également être équipé d'un groupe froid permettant de corriger la différence entre la consommation de froid, lors de la décharge du système, et la production de froid lors de la charge.

L'invention concerne également un procédé de stockage d'énergie et de production d'énergie électrique, dans lequel on réalise les étapes suivantes (figure 6) :
- on constitue un doublet thermique (GEODT) en réalisant un premier stock thermique (GT1) dans un massif rocheux (MR) hors d'eau, au moyen d'une technique de stockage thermique diffusif (STD) dans ledit massif, et un second stock thermique (GT2) de stockage en chaleur latente en bassin d'eau congelée.
- on fait circuler (CIRC) au moins un fluide caloporteur entre un premier stock thermique (GT1) dudit doublet et un second stock thermique (GT2) dudit doublet ; et
- lors d'une phase de production d'énergie électrique, on transforme (TRANSF) l'énergie thermique dudit fluide caloporteur en énergie électrique lors de son transport d'un stock thermique à un autre, en mettant en œuvre un cycle thermodynamique utilisant une différence de température entre lesdits stocks thermiques (GT1, GT2) ; ou lors d'une phase de stockage d'énergie thermique on transforme l'énergie électrique en énergie thermique en mettant en oeuvre un cycle thermodynamique de pompe à chaleur.

De façon préférentielle, le fluide caloporteur est du CO₂, et l'on détermine (DET) la différence de température dudit doublet thermique (GEODT) de façon à assurer que le CO₂ soit en phase supercritique dans le stock thermique (GT1) de plus forte température, et de façon à assurer que le CO₂ soit dans état diphasique liquide/gaz dans le stock thermique (GT2) de plus faible température.

De façon préférentielle, on transforme l'énergie thermique dudit fluide caloporteur en énergie électrique en utilisant un cycle thermodynamique basé sur un cycle de Rankine transcritique.

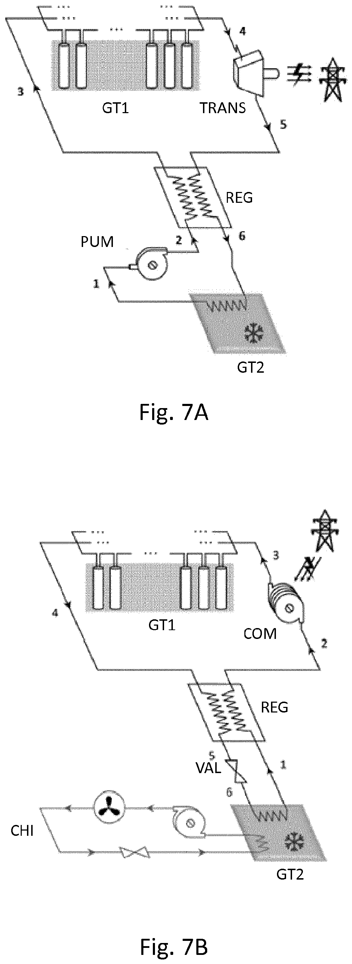

En situation de restitution (figure 7A) d'énergie électrique au réseau, une turbine de type ORC (TRANS) épuise le doublet thermique entre le géostock chaud (GT1) et les bassins d'eau congelée (GT2), par la mise en oeuvre également conjointe d'un régénérateur (REG) et d'une pompe (PUM).

En situation d'énergie électrique excédentaire (figure 7B), un cycle de pompe à chaleur régénère le doublet thermique entre le géostock chaud (GT1) et les bassins d'eau congelée (GT2). On peut utiliser une pompe à chaleur auxiliaire (CHI), un compresseur (COM), une vanne d'expansion (VAL) et un groupe froid auxiliaire. On peut également utiliser conjointement un régénérateur (REG).

Selon un autre mode de réalisation du procédé, utilisant le système selon l'invention comportant deux fluides caloporteurs, on réalise les étapes suivantes:
- on constitue le doublet thermique (GEODT) en réalisant le premier stock thermique (GT1) dans un massif rocheux (MR) hors d'eau, au moyen d'une technique de stockage thermique diffusif (STD) dans ledit massif, et le second stock thermique (GT2) de stockage en chaleur latente en bassin d'eau congelée.
- on fait circuler (CIRC1) le premier fluide caloporteur entre le premier stock thermique (GT1) du doublet et l'échangeur de chaleur (EP)
- on fait circuler (CIRC2) le deuxième fluide caloporteur entre le second stock thermique (GT2) du doublet et l'échangeur de chaleur (EP) ; et
- lors d'une phase de production d'énergie électrique, on transforme (TRANSF) l'énergie thermique d'au moins un fluide caloporteur en énergie électrique lors de son transport d'un stock thermique à un autre, en mettant en œuvre un cycle thermodynamique utilisant une différence de température entre lesdits stocks thermiques (GT1, GT2) ; ou lors d'une phase de stockage d'énergie thermique on transforme l'énergie électrique en énergie thermique en mettant en oeuvre un cycle thermodynamique de pompe à chaleur.

## Revendications

1. Système de stockage d'énergie et de production d'énergie électrique, comprenant un doublet thermique comportant un premier stock thermique (GT1) et un second stock thermique (GT2), des échangeurs thermiques (ET1, ET2) implantés dans chacun desdits stocks thermiques (GT1, GT2), au moins un moyen (CIR) permettant de faire circuler au moins un fluide caloporteur entre des échangeurs thermiques (ET1, ET2) d'un stock thermique à un autre, un moyen de transformation (PAC) de l'énergie électrique en énergie thermique, et un moyen de transformation (TRANS) de l'énergie thermique du fluide caloporteur en énergie électrique, mettant en œuvre un cycle thermodynamique utilisant une différence de température entre lesdits stocks thermiques (GT1, GT2), tel que :
- ledit premier stock thermique (GT1) est issu d'une technique de stockage thermique diffusif dans un massif rocheux (MR) hors d'eau **caractérisé en ce que**:
- ledit second stock thermique (GT2) est un stockage en chaleur latente en bassin d'eau glacée.

2. Système selon la revendication 1, dans lequel le fluide caloporteur est du CO₂.

3. Système selon la revendication 1, dans lequel le moyen (CIR) permettant de faire circuler au moins un fluide caloporteur, comporte :
- un échangeur de chaleur (EP) ;
- un premier moyen (CIR1) permettant de faire circuler un premier fluide caloporteur entre les échangeurs thermiques (ET1) du stock thermique (GT1) ayant la température la plus élevée et l'échangeur de chaleur (EP) ; et
- un second moyen (CIR2) permettant de faire circuler un second fluide caloporteur entre les échangeurs thermiques (ET2) du stock thermique (GT2) ayant la température la moins élevée et l'échangeur de chaleur (EP), l'échangeur de chaleur (EP) permettant un échange de chaleur entre les premier et second fluides caloporteurs.

4. Système selon la revendication 3, dans lequel le premier fluide caloporteur est du CO₂.

5. Système selon l'une des revendications 3 et 4 dans lequel le second fluide caloporteur est une solution aqueuse à base de mono-éthylène glycol.

6. Système selon l'une des revendications 3 à 5, dans lequel l'échangeur de chaleur (EP) est un échangeur à plaques.

7. Système selon l'une des revendications 3 à 6, dans lequel les échangeurs thermiques (ET2) du second stock thermique (GT2) sont des tubes en polypropylène.

8. Système selon l'une des revendications précédentes, dans lequel au moins un échangeur thermique (ET1) est une baudruche cylindrique en élastomère.

9. Système selon l'une des revendications précédentes, dans lequel au moins un échangeur thermique (ET2) est un tube en polypropylène.

10. Système selon l'une des revendications précédentes, dans lequel le moyen de transformation (TRANS) utilise un cycle thermodynamique basé sur un cycle de Rankine transcritique (RANK).

11. Système selon la revendication 10, dans lequel ledit moyen de transformation (TRANS) de l'énergie thermique est une turbine de type ORC.

12. Système selon l'une des revendications précédentes, dans lequel le moyen de transformation (PAC) de l'énergie électrique en énergie thermique utilise un cycle thermodynamique de pompe à chaleur.

13. Système selon la revendication 12, dans lequel ledit moyen de transformation (PAC) de l'énergie électrique en énergie thermique comporte une pompe à chaleur.

14. Procédé de stockage d'énergie et de production d'énergie électrique, **caractérisé en ce que** l'on réalise les étapes suivantes :
- on constitue un doublet thermique (GEODT) en réalisant un premier stock thermique (GT1) dans un massif rocheux (MR) hors d'eau, au moyen d'une technique de stockage thermique diffusif (STD) dans ledit massif, et un second stock thermique (GT2) de stockage en chaleur latente en bassin d'eau congelée.
- on fait circuler (CIRC) au moins un fluide caloporteur entre un premier stock thermique (GT1) dudit doublet et un second stock thermique (GT2) dudit doublet ; et
- lors d'une phase de production d'énergie électrique, on transforme (TRANSF) l'énergie thermique d'au moins un fluide caloporteur en énergie électrique lors de son transport d'un stock thermique à un autre, en mettant en œuvre un cycle thermodynamique utilisant une différence de température entre lesdits stocks thermiques (GT1, GT2) ; ou lors d'une phase de stockage d'énergie thermique on transforme l'énergie électrique en énergie thermique en mettant en œuvre un cycle thermodynamique de pompe à chaleur.

15. Procédé selon la revendication 14, dans lequel le fluide caloporteur est du CO₂, et l'on détermine (DET) la différence de température dudit doublet thermique (GEODT) de façon à assurer que le CO₂ soit en phase supercritique dans le stock thermique (GT1) de plus forte température, et de façon à assurer que le CO₂ soit dans état diphasique liquide/gaz dans le stock thermique (GT2) de plus faible température.

16. Procédé selon la revendication 15, dans lequel le CO₂ est dans un état supercritique dans les échangeurs thermiques (ET1) du stock thermique (GT1) ayant la température la plus élevée, et du CO₂ dans un état diphasique liquide/gaz dans les échangeurs thermiques (ET2) du stock thermique (GT2) ayant la température la moins élevée.

17. Procédé selon la revendication 16, dans lequel la température du CO₂ est sensiblement la température de fusion de la glace, et la pression du CO₂ est sensiblement de 20 bar, dans les échangeurs thermique (ET2) du stock thermique (GT2) ayant la température la moins élevée.

18. Procédé selon l'une des revendications 16 et 17, dans lequel la température du CO₂ est sensiblement comprise entre 0°C et 180°C, et de préférence entre 30°C et 140°C, et la pression du CO₂ est sensiblement comprise entre 80 bars et 160 bars, de préférence sensiblement égale à 140 bars, dans les échangeurs thermiques (ET1) du stock thermique (GT1) ayant la température la plus élevée.

19. Procédé selon l'une des revendications 14 à 18, dans lequel on utilise un système selon l'une des revendications 3 à 7, et dans lequel on fait circuler un premier fluide caloporteur entre le premier stock thermique (GT1) du doublet et l'échangeur de chaleur (EP), et on fait circuler (CIRC2) un deuxième fluide caloporteur entre le second stock thermique (GT2) du doublet et l'échangeur de chaleur (EP).

20. Procédé selon la revendication 19, dans lequel le CO₂ est en phase supercritique dans les échangeurs (ET1) du premier stock thermique de plus forte température (GT1), et dans un état diphasique liquide/gaz en entrée de l'échangeur de chaleur (EP).

21. Procédé selon l'une des revendications 14 à 20, dans lequel on transforme l'énergie thermique dudit fluide caloporteur en énergie électrique en utilisant un cycle thermodynamique basé sur un cycle de Rankine transcritique.

## Patentansprüche

1. System zum Speichern von Energie und zum Erzeugen von elektrischer Energie, mit einer thermischen Dublette, die einen ersten thermischen Speicher (GT1) und einen zweiten thermischen Speicher (GT2) aufweist, mit Wärmetauschern (ET1, ET2), die in jedem der thermischen Speicher (GT1, GT2) angeordnet sind, mit mindestens einem Mittel (CIR) zum Zirkulieren mindestens einer Wärmeübertragungsflüssigkeit zwischen den Wärmetauschern (ET1, ET2) von einem thermischen Speicher zu einem anderen, ein Mittel (PAC) zur Umwandlung von elektrischer Energie in thermische Energie und eine Einrichtung (TRANS) zur Umwandlung der thermischen Energie der Wärmeübertragungsflüssigkeit in elektrische Energie, die einen thermodynamischen Zyklus unter Verwendung einer Temperaturdifferenz zwischen den genannten thermischen Speichern (GT1, GT2) realisiert, so dass
- der erste thermische Speicher (GT1) aus einer diffusiven thermischen Speichertechnik in einer Gesteinsmasse (MR) außerhalb von Wasser stammt, **dadurch gekennzeichnet, dass**:
- der zweite thermische Speicher (GT2) ein Latentwärmespeicher in einem Kaltwasserbecken ist.

2. System nach Anspruch 1, wobei die Wärmeübertragungsflüssigkeit CO₂ ist.

3. System nach Anspruch 1, wobei das Mittel (CIR) zum Zirkulieren mindestens einer Wärmeübertragungsflüssigkeit aufweist:
- einem Wärmetauscher (EP);
- ein erstes Mittel (CIR1) zum Zirkulieren einer ersten Wärmeübertragungsflüssigkeit zwischen den Wärmetauschern (ET1) des Wärmespeichers (GT1) mit der höchsten Temperatur und dem Wärmetauscher (EP); und
- ein zweites Mittel (CIR2) zum Zirkulieren einer zweiten Wärmeübertragungsflüssigkeit zwischen den Wärmetauschern (ET2) des Wärmespeichers (GT2) mit der niedrigsten Temperatur und dem Wärmetauscher (EP), wobei der Wärmetauscher (EP) einen Wärmeaustausch zwischen dem ersten und dem zweiten Wärmeübertragungsfluid ermöglicht.

4. Das System nach Anspruch 3, wobei die erste Wärmeübertragungsflüssigkeit CO₂ ist.

5. System nach einem der Ansprüche 3 und 4, wobei die zweite Wärmeübertragungsflüssigkeit eine wässrige Lösung auf Basis von Monoethylenglykol ist.

6. System nach einem der Ansprüche 3 bis 5, wobei der Wärmetauscher (EP) ein Plattenwärmetauscher ist.

7. System nach einem der Ansprüche 3 bis 6, wobei die Wärmetauscher (ET2) des zweiten Wärmespeichers (GT2) Polypropylenrohre sind.

8. System nach einem der vorhergehenden Ansprüche, wobei mindestens ein Wärmetauscher (ET1) eine zylindrische Elastomerblase ist.

9. System nach einem der vorhergehenden Ansprüche, wobei mindestens ein Wärmetauscher (ET2) ein Polypropylenrohr ist.

10. System nach einem der vorhergehenden Ansprüche, wobei das Umwandlungsmittel (TRANS) einen thermodynamischen Zyklus auf der Basis eines transkritischen Rankine-Zyklus (RANK) verwendet.

11. System nach Anspruch 10, wobei das Mittel zur Umwandlung thermischer Energie (TRANS) eine Turbine vom Typ CRC ist.

12. System nach einem der vorhergehenden Ansprüche, wobei das Mittel zur Umwandlung von (PAC) elektrischer Energie in thermische Energie einen thermodynamischen Wärmepumpenzyklus verwendet.

13. System nach Anspruch 12, wobei das Mittel zur Umwandlung von (PAC) elektrischer Energie in thermische Energie eine Wärmepumpe aufweist.

14. Verfahren zum Speichern von Energie und zum Erzeugen von elektrischer Energie, **dadurch gekennzeichnet, dass** die folgenden Schritte durchgeführt werden:
- Bilden einer thermischen Dublette (GEODT), indem ein erster thermischer Speicher (GT1) in einer Gesteinsmasse (MR) außerhalb von Wasser mittels einer diffusiven thermischen Speichertechnik (STD) in dieser Masse erzeugt wird, und ein zweiter thermischer Speicher (GT2) zur Speicherung latenter Wärme in einem gefrorenen Wasserbecken;
- Zirkulieren mindestens eine Wärmeübertragungsflüssigkeit zwischen einem ersten Wärmespeicher (GT1) der Dublette und einem zweiten Wärmespeicher (GT2) der Dublette (CIRC); und
- Umwandeln thermischer Energie von mindestens einen Wärmeübertragungsflüssigkeit während seines Transports von einem thermischen Speicher zu einem anderen in elektrische Energie (TRANSF) während einer Phase der Erzeugung von elektrischer Energie, indem ein thermodynamischer Zyklus unter Verwendung einer Temperaturdifferenz zwischen den genannten thermischen Speichern (GT1, GT2) durchgeführt wird; oder Umwandeln elektrischer Energie in thermische Energie während einer Phase der Speicherung von thermischer Energie, indem ein thermodynamischer Wärmepumpenzyklus durchgeführt wird.

15. Verfahren nach Anspruch 14, wobei die Wärmeübertragungsflüssigkeit CO₂ ist und die Temperaturdifferenz der thermischen Dublette (GEODT) so bestimmt wird (BET), dass sichergestellt ist, dass sich das CO₂ im thermischen Speicher (GT1) höherer Temperatur in der überkritischen Phase befindet, und so, dass sichergestellt ist, dass sich das CO₂ im thermischen Speicher (GT2) niedrigerer Temperatur in einem zweiphasigen Flüssigkeits-/Gaszustand befindet.

16. Verfahren nach Anspruch 15, wobei CO₂ in den Wärmetauschern (ET1) des Wärmespeichers (GT1) mit der höchsten Temperatur in einem überkritischen Zustand ist und CO₂ in den Wärmetauschern (ET2) des Wärmespeichers (GT2) mit der niedrigsten Temperatur in einem Flüssig/Gas-Zweiphasenzustand ist.

17. Verfahren nach Anspruch 16, wobei in den Wärmetauschern (ET2) des Wärmespeichers (GT2), der die niedrigste Temperatur hat, die Temperatur des CO₂ im Wesentlichen die Schmelztemperatur des Eises ist und der Druck des CO₂ im Wesentlichen 20 bar beträgt.

18. Verfahren nach einem der Ansprüche 16 und 17, wobei in den Wärmetauschern (ET1) des Wärmespeichers (GT1) mit der höchsten Temperatur die Temperatur des CO₂ im Wesentlichen zwischen 0°C und 180°C, vorzugsweise zwischen 30°C und 140°C, liegt und der Druck des CO₂ im Wesentlichen zwischen 80 bar und 160 bar liegt, vorzugsweise im Wesentlichen gleich 140 bar beträgt.

19. Verfahren nach einem der Ansprüche 14 bis 18, bei dem ein System nach einem der Ansprüche 3 bis 7 verwendet wird, und bei dem eine erste Wärmeübertragungsflüssigkeit zwischen dem ersten Wärmespeicher (GT1) der Dublette und dem Wärmetauscher (EP) und eine zweite Wärmeübertragungsflüssigkeit zwischen dem zweiten Wärmespeicher (GT2) der Dublette und dem Wärmetauscher (EP) zirkuliert (CIRC2) wird.

20. Verfahren nach Anspruch 19, bei dem das CO₂; in den Wärmetauschern (ET1) des ersten Wärmespeichers höherer Temperatur (GT1) in einer überkritischen Phase und am Eingang des Wärmetauschers (EP) in einem zweiphasigen Flüssigkeits-/Gaszustand vorliegt.

21. Verfahren nach einem der Ansprüche 14 bis 20, wobei die thermische Energie der Wärmeübertragungsflüssigkeit unter Verwendung eines thermodynamischen Zyklus auf der Grundlage eines transkritischen Rankine-Zyklus in elektrische Energie umgewandelt wird.

## Claims

1. System for storing energy and producing electrical energy, comprising a thermal doublet including a first thermal stock (GT1) and a second thermal stock (GT2), heat exchangers (ET1, ET2) located in each of said thermal stocks (GT1, GT2), at least one means (CIR) for circulating at least one heat-transfer fluid between heat exchangers (ET1, ET2) from one thermal stock to another, a means (PAC) for converting electrical energy into thermal energy, and a means (TRANS) for converting the thermal energy of the heat transfer fluid into electrical energy, implementing a thermodynamic cycle using a temperature difference between the said thermal stocks (GT1, GT2), wherein said first thermal stock (GT1) comes from a diffusive thermal storage technique in a rocky mass (MR) out of water, **characterized in that** said second thermal stock (GT2) is a storage of latent heat in an ice water basin.

2. System according to claim 1, wherein the heat transfer fluid is CO₂.

3. System according to Claim 1, wherein the means (CIR) for circulating at least one heat transfer fluid, comprises: comprises:
- a heat exchanger (EP);
- a first means (CIR1) allowing a first heat transfer fluid to circulate between the heat exchangers (ET1) of the thermal stock (GT1) having the highest temperature and the heat exchanger (EP); and
- a second means (CIR2) allowing a second heat transfer fluid to circulate between the heat exchangers (ET2) of the thermal stock (GT2) having the lowest temperature and the heat exchanger (EP), the heat exchanger (EP) allowing heat exchange between the first and second heat transfer fluids.

4. System according to claim 3, wherein the first heat transfer fluid is CO₂.

5. System according to one of claims 3 and 4, wherein the second heat transfer fluid is an aqueous solution based on mono-ethylene glycol.

6. System according to one of claims 3 to 5, wherein the heat exchanger (EP) is a plate exchanger.

7. System according to one of claims 3 to 6, wherein the heat exchangers (ET2) of the second thermal stock (GT2) are polypropylene tubes.

8. System according to one of the preceding claims, wherein at least one heat exchanger (ET1) is a cylindrical elastomeric balloon.

9. System according to one of the preceding claims, wherein at least one heat exchanger (ET2) is a polypropylene tube.

10. System according to one of the preceding claims, wherein the transformation means (TRANS) uses a thermodynamic cycle based on a transcritical Rankine cycle (RANK).

11. A system according to claim 10, wherein said thermal energy converting means (TRANS) is an ORC type turbine.

12. System according to one of the preceding claims, wherein the means for converting (PAC) electrical energy into thermal energy uses a thermodynamic heat pump cycle.

13. System according to claim 12, wherein said means for converting (PAC) electrical energy into thermal energy comprises a heat pump.

14. A process for storing energy and producing electrical energy, **characterized in that** the following steps are carried out:
- a thermal doublet (GEODT) is formed by carrying out a first thermal stock (GT1) in a rocky massif (MR) out of water, by means of a diffusive thermal storage (STD) technique in said massif, and a second thermal stock (GT2) for storage in latent heat in a frozen water basin;
- at least one heat transfer fluid is circulated (CIRC) between a first thermal stock (GT1) of said doublet and a second thermal stock (GT2) of said doublet; and
- during an electrical energy production phase, the thermal energy of at least one heat transfer fluid is converted (TRANSF) into electrical energy during its transport from one thermal stock to another, by implementing a thermodynamic cycle using a temperature difference between said thermal stocks (GT1, GT2); or during a thermal energy storage phase, electrical energy is converted into thermal energy by implementing a thermodynamic heat pump cycle.

15. Process according to claim 14, wherein the heat transfer fluid is CO₂, and the temperature difference of said thermal doublet (GEODT) is determined (DET) so as to ensure that the CO₂ is in the supercritical phase in the thermal stock (GT1) of higher temperature, and so as to ensure that the CO₂ is in two-phase liquid / gas state in the thermal stock (GT2) of lower temperature.

16. Process according to claim 15, wherein the CO₂ is in a supercritical state in the heat exchangers (ET1) of the thermal stock (GT1) having the highest temperature, and CO₂ in a two-phase liquid / gas state in the heat exchangers (ET2) of the thermal stock (GT2) with the lowest temperature.

17. A method according to claim 16, wherein the temperature of the CO₂ is substantially the melting temperature of ice, and the pressure of the CO₂ is substantially 20 bar, in the heat exchangers (ET2) of the thermal stock (GT2) having the highest temperature lower.

18. Process according to one of claims 16 and 17, wherein the temperature of the CO₂ is substantially between 0°C and 180°C, and preferably between 30°C and 140°C, and the pressure of the CO₂ is substantially between 80 bars and 160 bars, preferably substantially equal to 140 bars, in the heat exchangers (ET1) of the thermal stock (GT1) having the highest temperature.

19. Process according to one of claims 14 to 18, wherein a system according to one of claims 3 to 7 is used, and wherein a first heat transfer fluid is circulated between the first thermal stock (GT1) of the doublet and the heat exchanger (EP), and a second heat transfer fluid is circulated (CIRC2) between the second thermal stock (GT2) of the doublet and the heat exchanger (EP).

20. Process according to claim 19, wherein the CO₂ is in the supercritical phase in the exchangers (ET1) of the first thermal stock of higher temperature (GT1), and in a two-phase liquid / gas state at the inlet of the heat exchanger (EP).

21. Method according to one of claims 14 to 20, wherein the thermal energy of said heat transfer fluid is converted into electrical energy using a thermodynamic cycle based on a transcritical Rankine cycle.
